# EUROPEAN PATENT APPLICATION

(11) **EP 0 872 372 A1**
(43) Date of publication of application: **21.10.1998**
(21) Application number: 98850058.3
(22) Date of filing: 17.04.1998
(51) Int. Cl.: B60K 15/067, B60K 15/03

(54) **Fuel tank**

(30) Priority: 17.04.1997 SE 9701431
(71) Applicant: United Parts Läreda AB, 421 31 Västra Frölunda (SE)
(72) Inventor: Svensson, Nicolas, 426 68 Västra Frölunda (SE)
(74) Representative: Franzén, Lars Hjalmar

(57) **Abstract**

A fuel tank e.g. for trucks, comprising a tank container (21, 22) and mounting means (23, 25) for securing the tank. A characterising feature of the tank is that the mounting means comprise on the one hand external mounting means (25) for attaching the fuel tank to an exterior object, such as a frame member, and on the other parts (23) projecting into the tank container and being integrated with said container. The tank container further comprises sheet-metal mounting holders (26) at least at one of the mounting means (25), said holders (26) intended to be located between the external mounting means and the exterior object, said mounting holders (26) being attached to the exterior object on either side of and at a certain distance from the fastening point of said mounting means (25) to said holder, whereby said mounting holder (26) will act as a spring means.

## Description

### Technical Field

The present invention relates to a fuel tank e.g. for trucks.

### Background

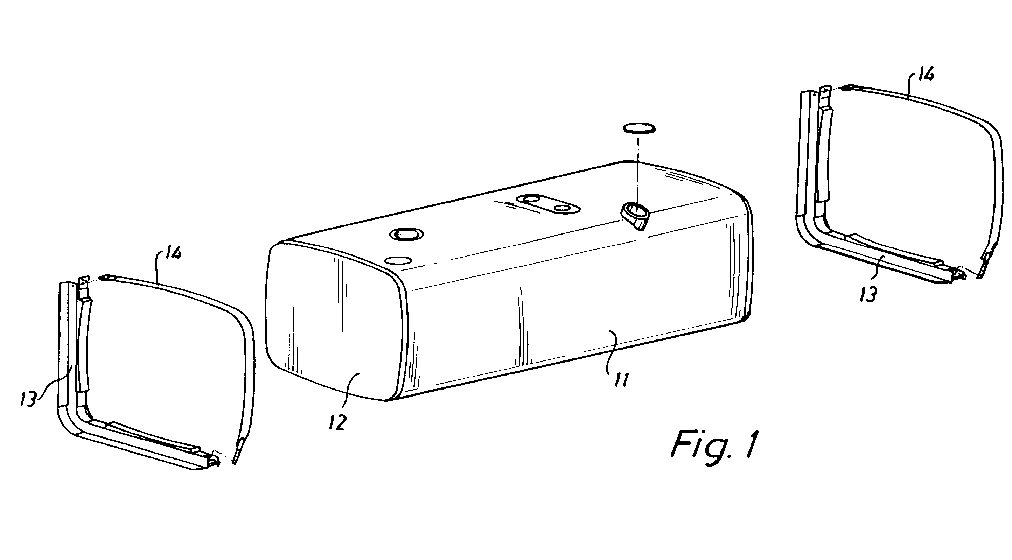

Fuel tanks for heavy duty vehicles, such as trucks, conventionally are manufactured as an outer casing disposed around internal apertured dividers. The outer casing comprises a circumferential jacket surface 11 and essentially flat end walls 12, as illustrated in Fig. 1. The outer casing preferably is joined together by means of welding, which often is a comparatively complicated process, since a large number of joints must be welded together. The internal apertured dividers serve both to impart stability to the tank and to prevent sloshing inside the tank. To attach the tank to the vehicle, brackets 13 are initially secured to the vehicle frame, for instance by being screwed thereto, and the tank is thereafter placed on top of the brackets. Finally, the tank is secured with the aid of tightening or clamp straps 14 made from metal or some equivalent material, which straps are passed around the tank and tightened. According to this arrangement, the brackets consequently are located externally of the tank. In all, the manufacture of the tank as well as the mounting thereof to the vehicle are comparatively complex processes, and therefore both time-consuming and expensive.

In order to facilitate the mounting of the tanks to the vehicle, DE-34 45 427 proposes a tank, which in itself comprises the required attachment and suspension means. In consequence thereof, the number of components to be mounted in the very attachment process is reduced and the work involved therefore may be effected more rapidly and conveniently. However, this prior-art tank uses essentially the same suspension system as the previously known conventional tanks, the difference compared with these conventional prior-art tanks essentially being that in this case mounting means are fitted to the tank prior to the latter being mounted on the vehicle, instead of the other way round. This means that the total number of components remains essentially equivalent and that the total amount of work required remains substantially the same.

### Object of the Invention

The present invention therefore has for its object to provide a fuel tank which has a larger fuel volume relative to the length of the tank and which is more convenient and less expensive to manufacture and to mount.

### Summary of the Invention

This object is achieved in a fuel tank of the kind defined in claim 1. By the combination according to the invention of divisional means and mounting means in the fuel tank, resulting in combined internal mounting means for securement to the tank and external mounting means for securement to the vehicle, several advantages are obtained, viz.:
- Larger tank volume owing to the disposition of large parts of the mounting means in the tank interior, with the result that the tank may contain a larger quantity of fuel per frame meter.
- Few structural tank components, facilitating the manufacture of the tank components as well as the assembly thereof.
- The tank and the mounting means form a unit which advantageously is assembled separately, in time as well as in space, from the mounting of the tank itself, with the result that each tank unit may be handled as a separate article by tank fitters and at tank sales points.
- Owing to its simple structure, the tank becomes a great deal lighter than conventional tanks, with resulting lower vehicle weight.
- Owing to the suggested arrangement, the apertured dividers become integrated with the tank.
- The tank is easy to mount.

According to one aspect of the invention, the fuel tank further comprises domed, preferably deep-drawn end walls, which thus increase the tank volume. Owing to this arrangement, the manufacture of the tank is facilitated further.

According to yet another aspect of the invention, the mounting means are adapted to be secured to resilient sheet-metal mounting holders by means of which the tank may be resiliently suspended from the frame of the vehicle. In this manner the load on the tank as well as on the attachment devices is considerably reduced with resulting prolonged serviceable life.

### Brief Description of the Drawing Figures

In the accompanying drawings:
Fig. 1 is a view of a conventional prior-art fuel tank including the associated mounting means;
Fig. 2 is an exploded view of a fuel tank in accordance with the invention;
Fig. 3 is a view of an assembled fuel tank in accordance with the invention, and
Fig. 4 is a view of an alternative embodiment of a fuel tank in accordance with the invention.

### Detailed Description of Preferred Embodiments

The invention will be described hereafter in more detail for exemplifying purposes by way of one embodiment and with reference to the accompanying drawings.

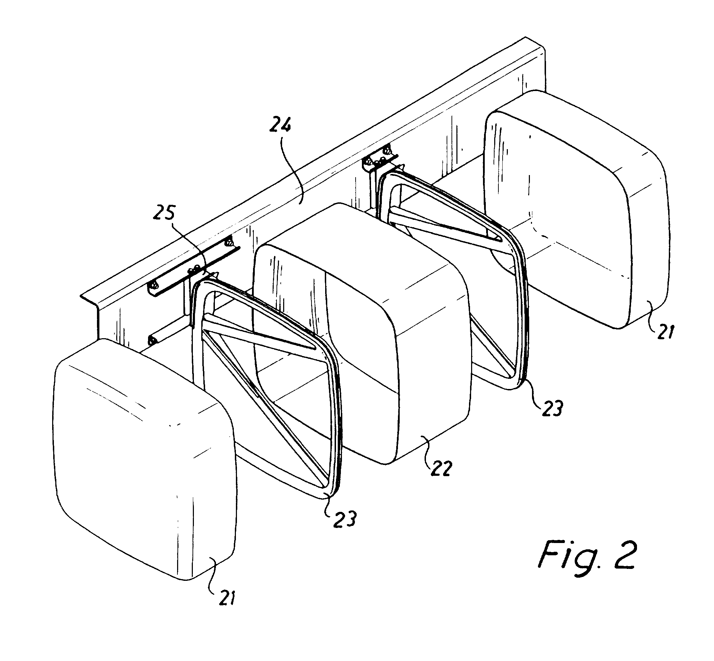

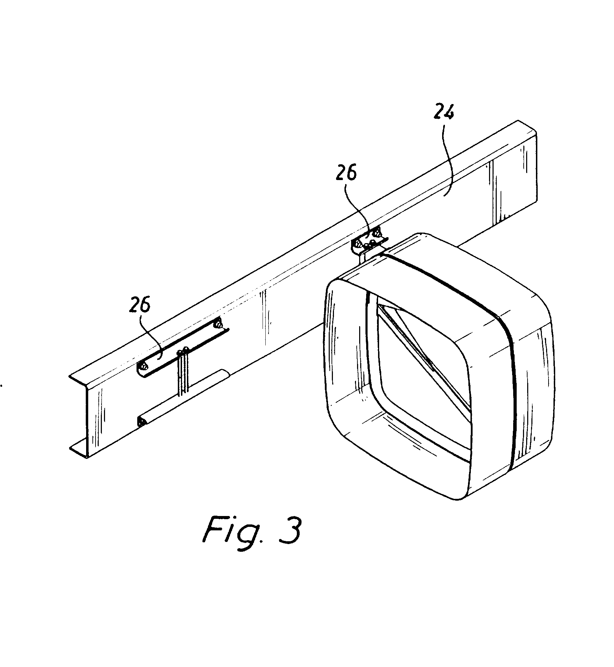

A tank in accordance with the invention, illustrated in Figs 2 and 3, is assembled by securing two end wall sections 21 and one middle section 22 to two apertured dividers 23. The end wall sections 21 preferably are produced by a deep-drawing technique or similar technique so as to enclose a predetermined volume. The outer profile configuration of the apertured dividers essentially corresponds to the inner marginal profile configuration of the end wall sections and the middle sections.

The apertured divider might be formed with an outwardly slightly sharp edge portion having a certain lateral extension, allowing one end wall section 21 and one middle section 22 to be so juxtaposed as to be almost in contact with one another while at the same time abutting against the apertured divider. This arrangement allows the end wall section as well as the circumferential jacket surface to be secured to the apertured divider by means of one single welded seam. Alternatively, the end wall section and the circumferential jacket surface may be glued to the apertured divider, the latter in this case preferably being formed with projecting attachment edge flanges. According to a further alternative using glue, the end wall section and the associated circumferential jacket surface are inserted in a groove in the apertured divider prior to gluing.

A further alternative embodiment is to initially, for instance by means of gluing or welding, secure an end wall section or a middle section to a apertured divider and thereafter to fit the other section on top thereof such that it overlaps the first section, whereupon said second section is attached to the first section.

In the case of small tanks, one apertured divider may be sufficient and the middle section may be eliminated in this case, the resulting tank thus consisting of two end wall sections which are secured to an apertured divider using any one of the methods described in the aforegoing.

The apertured dividers, which preferably are moulded, further comprises projecting mounting members 25 in accordance with the teachings of the invention. These members 25 are arranged to protrude from the tank when the latter assumes the mounted position as indicated above, and in the areas of these mounting members 25 the circumferential jacket surface and the respective end wall section thus must be secured by means of separate welded seams on either side of the mounting members. Owing to the provision of these mounting members the tank may be secured directly to a vehicle frame member 24 by being hooked thereto, by being pushed in position, by means of a bolted joint or the like.

In accordance with a preferred embodiment the mounting members 25 are secured in sheet-metal mounting holders 26 which are directed essentially in parallel with the longitudinal axis of the tank. The sheet-metal holders are then secured to a vehicle frame member, preferably in two attachment points, and in such a manner that the attachment points for securing the sheet-metal holders to the beam are spaced a certain distance, as seen in the longitudinal extension of the sheet-metal holder, from the attachment point for securing the sheet-metal holder to the mounting member of the tank. In this manner the sheet-metal mounting holder will act as a leaf spring, capable of absorbing torsional movements of the vehicle frame, of softening abrupt blows and the like. Consequently the stress on the tank and on its mounting means is reduced and the useful life is prolonged.

The dividers preferably are apertured in the area intended to be positioned interiorly of the tank, whereby these dividers on the one hand increase the strength and the stability of the tank and on the other serve as fuel antislosh baffle means inside the tank. However, differently configured apertured divider means are conceivable. For instance, the divider means may include an annular part having a protruding mounting means.

By designing fuel tanks as a modular system in accordance with the invention, comprising only three different types of components, viz. end wall sections, middle sections and apertured divider sections, the work of assembling the tank is made simple and flexible and therefore also quick and inexpensive. The design of the tank also makes the tank easy to mount to the vehicle without having to resort to additional equipment, which also speeds up and facilitates the work involved and reduces the consumption of material.

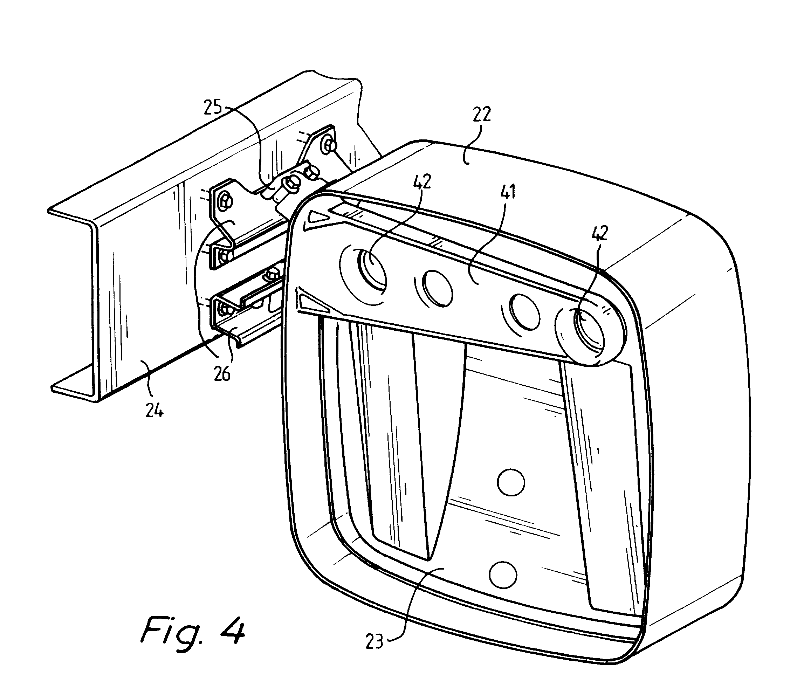

Fig. 4 illustrates an alternative embodiment of a fuel tank in accordance with the invention. Like in the previous embodiment this fuel tank comprises a circumferential jacket surface 22 and interior apertured dividers 23. However, in this case the circumferential jacket surface 22 is not partioned and joined together in the proximity to the interior apertured dividers 23. Instead, the circumferential jacket surface comprises groove-like apertures adjacent the apertured dividers 23. Swordlike mounting elements 41 are inserted through these apertures. Remaining external portions of these mounting elements then form the mounting members 25 which are adapted to be secured to the vehicle. In the interior of the tank the mounting elements 41 are secured to the apertured divider 23 in attachment points 42. The attachment method used preferably is a riveting method, the so called ridge-locking method, according to which part of the apertured divider is forced into and through openings formed in the mounting element so as to appear on the opposite side, thus providing a mechanical locking arrangement. Other ways of attaching mounting elements to the apertured divider are possible, such as by means of welding.

The sheet-metal mounting holders 26 preferably are of such a nature as to allow the mounting members to be secured from the outside, i.e. all operational steps involved in the securing process are effected from the face of the exterior object that is turned away from the tank. This feature may be obtained e.g. by configuring the sheet-metal mounting holders with a certain lengthwise extension in the direction between the frame in which they are secured, and the tank, it thus being possible to effect the securement, for instance by means of bolted joints, at a distance from and essentially in parallel with the surface of the exterior object, as illustrated in Fig. 4. This arrangement facilitates the tank mounting work. Obviously the sheet-metal mounting holders need not extend horizontally but could equally well extend at an angle or be vertical and still provide a certain resiliency.

The invention has been described above by way of one embodiment. Many varieties of the fuel tank, some of which have already been mentioned, are possible. Such similar varieties should be considered to be embraced by the invention such as the latter is defined in the claims attached hereto.

## Claims

1. A fuel tank e.g. for trucks, comprising a tank container (21, 22) and mounting means (23, 25) for securing the tank, said mounting means comprising on the one hand external mounting means (25) for attaching the fuel tank to an exterior object, such as a frame member, and on the other parts (23) projecting into the tank container and being integrated with said container, **characterised** in that it further comprises sheet-metal mounting holders (26) at least at one of the mounting means (25), said holders (26) intended to be located between the external mounting means and the exterior object, said mounting holders (26) being attached to the exterior object on either side of and at a certain distance from the fastening point of said mounting means (25) to said holder, whereby said mounting holder (26) will act as a spring means.

2. A fuel tank as claimed in claim 1, **characterised** in that the mounting means are joined to apertured divider means inside the tank, said divider means preferably forming apertured dividing walls inside said tank.

3. A fuel tank as claimed in claim 1 or 2, **characterised** in that the tank container comprises at least one open-ended middle section (22) and two end wall sections (21), in that intermediate said sections an apertured divider means (23) is located, said apertured divider means comprising projecting parts (25) extending beyond the extension of the middle section, and in that said projecting parts form the external fuel-tank mounting means.

4. A fuel tank as claimed in any one of the preceding claims, **characterised** in that the apertured divider means (23) are apertured dividing walls serving as antislosh baffles.

5. A fuel tank as claimed in any one of the preceding claims, **characterised** in that the mounting means (25) are adapted to be anchored to a frame member of a vehicle.

6. A fuel tank as claimed in any one of the preceding claims, **characterised** in that the middle section (22), the end wall sections (21) and the apertured divider means (23) are joined together by welding.

7. A fuel tank as claimed in claim 6, **characterised** in that the middle section (22) is secured to the respective end wall section (21) and to apertured divider means (23) located therebetween by means of one single welded seam.
